# EUROPEAN PATENT APPLICATION

(11) **EP 4 671 898 A1**
(43) Date of publication of application: **31.12.2025**
(21) Application number: 25154165.2
(22) Date of filing: 27.01.2025
(51) Int. Cl.: G05D 1/244, G05D 1/246, G05D 1/698, G05D 105/28, G05D 107/70, G05D 109/10, G05D 111/10, G05D 1/247

(54) **METHOD FOR ROBOT TRAVEL, ASSOCIATED APPARATUS AND STORAGE MEDIUM**

(30) Priority: 27.06.2024 CN 202410851963
(71) Applicant: BEIJING YOUZHUJU NETWORK TECHNOLOGY CO. LTD., Beijing 101299 (CN)
(72) Inventor: Chen, Sheng, Beijing, 100028 (CN); Xu, Tao, Beijing, 100028 (CN); Dan, Mingdi, Beijing, 100028 (CN); Zhang, Chi, Beijing, 100028 (CN); Wang, Yansheng, Beijing, 100028 (CN); Liu, Yufei, Beijing, 100028 (CN); Yuan, Shunying, Beijing, 100028 (CN)
(74) Representative: Grünecker Patent- und Rechtsanwälte PartG mbB

(57) **Abstract**

The method includes: determining a destination of a target robot in a target area; in a process of the target robot traveling toward the destination, detecting, in an environment in which the target robot is located, indication information for the destination; and in response to detecting the indication information, determining, based on a current location of the target robot and the indication information, a target travel path of the target robot from the current location toward the destination. In this way, the target robot can be helped to adjust in the traveling process based on the indication information, thereby ensuring that the target robot can accurately and stably reach the end point.

## Description

### FIELD

Example embodiments of the present disclosure generally relate to the field of computer technologies, and more particularly, to a method, apparatus, device, and storage medium for robot travel.

### BACKGROUND

Robot navigation mainly involves the ability of robots to move and position autonomously in various environments. The robot navigation technology is mainly based on the principle of environmental perception, path planning and obstacle avoidance. The environmental perception may be obtaining the surrounding environment information through a device such as a laser radar and a vision sensor; the path planning may be determining an optimal path of the robot from the starting point to the end point through a global map; and the obstacle avoidance may be monitoring the environment in real time through the sensor and avoiding the obstacle. However, such a navigation approach is difficult to accommodate dynamically changing environments.

### SUMMARY

In a first aspect of the present disclosure, a method for robot travel is provided. The method comprises: determining a destination of a target robot in a target area; in a process of the target robot traveling toward the destination, detecting, in an environment in which the target robot is located, indication information for the destination; and in response to detecting the indication information, determining, based on a current location of the target robot and the indication information, a target travel path of the target robot from the current location toward the destination.

In a second aspect of the present disclosure, an apparatus for robot travel is provided. The apparatus comprises: a destination obtaining module configured to determine a destination of the target robot in the target area; an indication information detecting module configured to, in a process of the target robot traveling toward the destination, detect, in an environment in which the target robot is located, indication information for the destination; and a travel path determining module configured to, in response to detecting the indication information, determine, based on a current location of the target robot and the indication information, a target travel path of the target robot from the current location toward the destination.

In a third aspect of the present disclosure, an electronic device is provided. The device comprises at least one processor; and at least one memory, coupled to the at least one processor and storing instructions to be executed by the at least one processor. The instructions, when executed by the at least one processor, cause the device to perform the method of the first aspect.

In a fourth aspect of the present disclosure, a computer-readable storage medium is provided. The computer-readable storage medium has a computer program stored thereon, and the computer program is executable by the processor to implement the method of the first aspect.

In a fifth aspect of the present disclosure, a computer program product is provided. The computer program product comprises computer-executable instructions that, when executed by a processor, implement the method of the first aspect of the present disclosure.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a flowchart of an example process for robot travel according to some embodiments of the present disclosure;
FIG. 3 illustrates a schematic diagram of an example of a global map according to some embodiments of the present disclosure;
FIG. 4 illustrates a schematic diagram of an example of planning a travel path for a target robot based on indication information according to some embodiments of the present disclosure;
FIG. 5A illustrates a schematic diagram of a first example of a route guidance identifier according to some embodiments of the present disclosure;
FIG. 5B illustrates a schematic diagram of a second example of a route guidance identifier according to some embodiments of the present disclosure;
FIG. 5C illustrates a schematic diagram of a third example of a distance identifier according to some embodiments of the present disclosure;
FIG. 6 illustrates a schematic structural block diagram of an apparatus for robot travel according to some embodiments of the present disclosure;
FIG. 7 illustrates a block diagram of an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, the embodiments are provided for a more thorough and complete understanding of the present disclosure. It should be understood that the drawings and embodiments of the present disclosure are for exemplary purposes only and are not intended to limit the scope of the present disclosure.

It should be noted that the title of any section/subsection provided herein is not limiting. Various embodiments are described throughout and any type of embodiments may be comprised in any section/subsection. Furthermore, the embodiments described in any section/subsection may be combined in any manner with the same section/subsection and/or any other embodiments described in different sections/subsections.

In the description of the embodiments of the present disclosure, the terms "comprising" and the like should be understood to comprise "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be comprised below. The terms "first," "second," and the like may refer to different or identical objects. Other explicit and implicit definitions may also be comprised below.

Embodiments of the present disclosure may relate to data of a user, acquisition and/or use of data, and the like. These aspects all follow the corresponding laws and regulations and relevant regulations. In the embodiments of the present disclosure, all data collection, acquisition, processing, managing, forwarding, use, etc., are performed on the premise that the user knows and confirms. Accordingly, when implementing the embodiments of the present disclosure, the types of the data or information that may be involved, the usage scope, the usage scenario, and the like should be notified to the user and obtain the authorization of the user in an appropriate manner according to the relevant laws and regulations. The specific notification and/or authorization manner may vary according to actual situations and application scenarios, and the scope of the present disclosure is not limited in this respect.

According to the solutions in the present specification and the embodiments, for example, if personal information processing is involved, processing may be performed on the premise of having a legality basis (for example, obtaining consent of a personal information subject, or necessary for performing a fulfillment contract), and processing only within a specified or agreed range. The user rejects personal information other than necessary information required by the basic function, and does not affect the basic function of the user.

As briefly mentioned above, in the robot navigation process, the path planning is to determine the optimal path of the robot from the start point to the end point by analyzing the global map. However, the global map is relatively static, and the actual environment may change at any time. For example, the appearance of a new obstacle or a change in road may cause the global map to be inconsistent with the actual environment, thereby affecting the navigation of the robot. In addition, in some cases, such as indoor or complex environments, navigation signals may be limited or interfered, which may cause errors in locating the robot on the global map, thereby affecting accuracy of navigation. On the other hand, in some cases, there may be some information about direction or location in the environment in which the robot is located. Thus, it is desirable for the robot to utilize such information.

Thus, embodiments of the present disclosure provide a solution for robot travel. According to various embodiments of the present disclosure, a destination of the target robot in the target area is determined. Then, in a process of the target robot traveling toward the destination, in an environment in which the target robot is located, indication information for the destination is detected. Then, in response to detecting the indication information, a target travel path of the target robot from a current location toward the destination is determined based on the current location of the target robot and the indication information.

As will be more clearly understood from the following description, embodiments of the present disclosure can accurately guide a target robot to reach a predetermined destination through indication information in a real-time environment. In this process, the real-time indication information helps the target robot adjust in the traveling process to adapt to possible environmental changes, especially in cases that the global map may not completely reflect the latest environmental change or the locating signal is poor. In addition, since the method is based on the indication information in the environment, the navigation of the target robot can reduce or even get rid of reliance on the global map, thereby avoiding the problem of locating errors on the global map, and further ensuring that the target robot can accurately and stably reach the destination.

Various example implementations of this scheme will be described in detail below in conjunction with the accompanying drawings.

### Example Environment

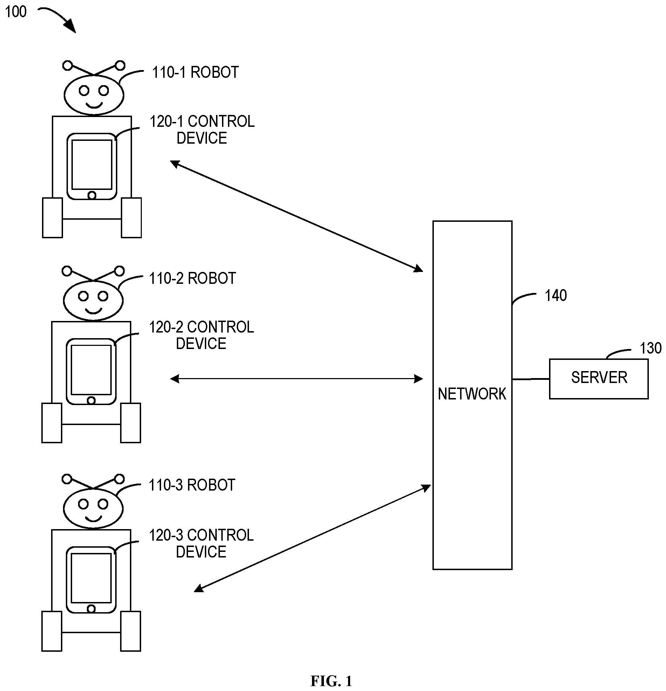

FIG. 1 illustrates a schematic diagram of an example environment in which embodiments of the present disclosure can be implemented. Referring to FIG. 1, one or more robots, such as a first robot 110-1, a second robot 110-2, and a third robot 110-3, are deployed in the environment 100. The first robot 110-1, the second robot 110-2, and the third robot 110-3 may also be collectively referred to as robots 110 or individually referred to as a robot 110. Hereinafter, an example embodiment of path planning will be described by taking the first robot 110-1 as an example. A control device may be deployed in each robot 110 to control the operation of the robot. For example, as shown in FIG. 1, the first robot 110-1, the second robot 110-2, and the third robot 110-3 are respectively deployed with a control device 120-1, a control device 120-2, and a control device 120-3, which may also be collectively referred to as control devices 120 or individually referred to as a control device 120. In some embodiments, only one robot may be deployed in the environment 100, and the movement path of the only one robot needs to be planned. In some embodiments, multiple robots may be deployed in the environment 100. In this case, path planning may be performed for multiple robots in the environment 100 at the same time, or path planning may be performed only for any one robot in the environment 100.

In embodiments of the present disclosure, the robot 110 may be utilized for various suitable uses, for example, may be a transportation robot for delivering goods, and the control device 120 may be configured to plan a movement path of the robot 110. The robot 110 may, for example, execute a package delivery service. In this case, the control device 120 may obtain information such as an origin place, a destination, a recipient, and contact information of the recipient. As an example, the robot 110 works in an indoor environment, such as a warehouse environment.

In the environment 100 of FIG. 1, the control device 120 may be any type of microcontroller, programmable logic controller, industrial computer, single board computer, field programmable gate array, digital signal processor, multi-core processor, or any combination of the foregoing, comprising accessories and peripherals of these devices, or any combination thereof.

In some embodiments, the control device 120 may control the robot 110 based on the control instruction generated by the control device 120 itself.

In some embodiments, the operation of the robot 110 may be controlled via a server 130. The server 130 may receive relevant data for various tasks and remotely control the operation of the robot 110. The control device 120 collects data of the robot 110 and communicates with the server 130 via a network 140 to send the data to the server 130. The server 130 determines a control instruction for the robot according to the acquired data, and sends the control instruction to the control device 120. The control device 120 controls the robot 110 based on the received control instruction. The server 130 may be various types of computing systems / servers capable of providing computing power, comprising, but not limited to, mainframes, edge computing nodes, computing devices in a cloud environment, and the like.

In some embodiments, the robot 110 may be connected to and communicate with the server 130 via the network 140. The robot 110 may send the relevant data of each task executed by the robot 110 to the server 130 in real time.

It should be understood that the structures and functions of the various elements in the environment 100 are described for exemplary purposes only and do not imply any limitation to the scope of the present disclosure.

### Example Process

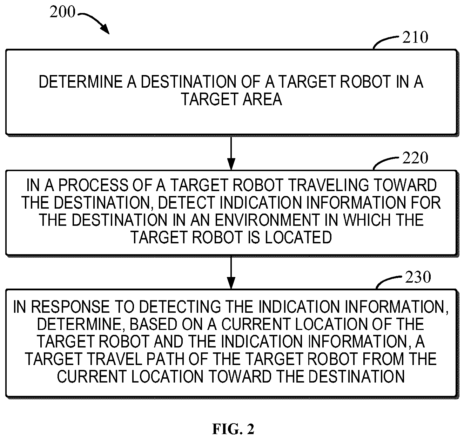

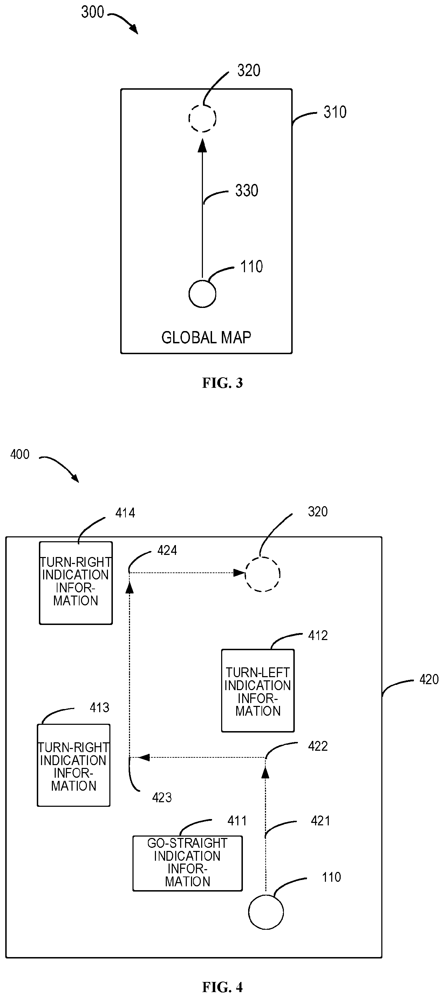

FIG. 2 illustrates a flowchart of an example process 200 for robot travel according to some embodiments of the present disclosure. FIG. 3 illustrates a schematic diagram of an example 300 of a global map 310 according to some embodiments of the present disclosure. Example process 200 is described below in conjunction with FIG. 3.

At block 210, the control device 120 determines a destination 320 of the target robot in the target area. In embodiments of the present disclosure, the target robot may be one or more of the first robot 110-1, the second robot 110-2, and the third robot 110-3 described above. For clarity of description, unless being described specifically, the target robot hereinafter refers to the robot 110 described above.

In some embodiments, the destination 320 may be indicated by location information on a map, or destination 320 may be represented by a name or code, or the like. For example, the destination 320 may be determined based on specific information (for example, a text instruction, a voice instruction, or other external input) provided in advance to the control device 120, and such specific information may comprise information (for example, address information or location code) that can uniquely indicate the destination 320 during the navigation process. Alternatively or additionally, the destination 320 may be determined based on a global map of the target area, e.g., the destination 320 may be mapped on the global map 310 and may be represented in a form such as coordinates. The global map 310 may be constructed in advance, or may be dynamically constructed based on appropriate real-time exploration and environment perception of the device. For example, the global map 310 may comprise key information in the target area, such as an obstacle, a walkable path, and an important identifier.

With continued reference to FIG. 2, at block 220, the control device 120 detects, in a process in which the target robot travels toward the destination 320, indication information for the destination 320 in the environment in which the target robot is located.

FIG. 4 illustrates a schematic diagram of an example 400 for planning a travel path for a target robot based on indication information according to some embodiments of the present disclosure. Referring to FIG. 4, for example, the target robot may be responsible for transporting cargo from a starting point to the specified destination 320 in a target area 420. To assist the target robot in completing this task, one or more pieces of indication information may be arranged in the target area 420. For example, as shown in FIG. 4, at least 4 pieces of indication information for the destination 320 are arranged in the target area 420, which are go-straight indication information 411, turn-left indication information 412, turn-right indication information 413, and turn-right indication information 414, respectively. The indication information may be configured to indicate a route from a location where the indication information is located to one or more specific locations (e.g., a location where the next indication information is located). During the process of the target robot traveling, the control device 120 may continuously perceive the surrounding environment by using an appropriate sensing device (for example, a sensor and a camera), so as to detect the indication information related to the destination 320.

For example, the indication information may comprise physical information or digital information. For example, the indication information may comprise a label, a QR code, a road sign, and the like. Such indication information may be specifically set for the purpose of assisting the robot to travel, or may be general purpose indication information in the environment where the robot is located.

In some embodiments, the control device 120 may detect the surrounding environment by utilizing one or more sensing devices, to obtain the indication information. For example, the control device 120 may detect the indication information utilizing a sensing device such as a camera, a Bluetooth device, and a radio frequency device.

In some embodiments, the control device 120 may detect the indication information by utilizing at least one of a camera, a Bluetooth device, or a radio frequency device. For example, the control device 120 may detect the indication information by utilizing a camera to perform image recognition on the environment in which the target robot is located. In this way, the control device 120 may detect visual elements such as a road sign, a sign, and a ground identifier and so on, to obtain required indication information. For example, in a warehouse, the control device 120 may determine a next direction of travel by recognizing a label on the shelf or a path identifier on the ground. Based on the image recognition, rich and high-precision information can be obtained, which helps the control device 120 to accurately understand the indication information.

For example, the control device 120 may detect the indication information from the environment in which the target robot is located by utilizing a Bluetooth device (or utilizing a Bluetooth signal). The Bluetooth signal may be utilized for short range wireless communications. In embodiments of the present disclosure, a Bluetooth beacon or a Bluetooth tag may be arranged at a key location in the target area 420, and the control device 120 determines a next direction of travel by parsing the Bluetooth signals. Based on the Bluetooth signal, the indication information can be detected with lower power consumption, which is suitable for a target robot working for a long time. In addition, the Bluetooth beacon can be conveniently arranged and moved, so that the navigation requirements of different scenes can be met.

For example, the control device 120 may detect the indication information from the environment in which the target robot is located by utilizing a radio frequency device (or utilizing a radio frequency signal). Based on the radio frequency signal, a large range can be covered, which is suitable for the target robot carrying out activities in a wide area. In addition, the penetration of the radio frequency signal is strong, thereby reducing the possibility of signal loss.

In some embodiments, the indication information sensed with different types of sensing devices, or a portion thereof, may be fused with each other. For example, the control device 120 may jointly detect the indication information by utilizing multiple of a camera, a Bluetooth device, and a radio frequency device. For example, the control device 120 may utilize the camera to detect a first part of the indication information by performing image recognition on the environment in which the target robot is located. The control device 120 may detect a second part of the indication information from the environment in which the target robot is located by utilizing the Bluetooth device (or utilizing the Bluetooth signal). The control device 120 may detect a third part of the indication information from the environment in which the target robot is located by utilizing the radio frequency device (or utilizing a radio frequency signal). Further, the control device 120 obtains the complete indication information by combining the first part, the second part, and the third part.

In some embodiments, the indication information sensed with different types of sensing devices, or a portion thereof, may be checked against each other. In this way, the accuracy of robot travel can be improved.

It should be noted that the above description of the sensing device is merely an example, and the embodiments of the present disclosure may set more sensing devices according to the carrying capacity of the target robot, thereby implementing more diversified detection means. Moreover, the manner of combining the sensing devices may be in other forms, and the embodiments of the present disclosure are not enumerated herein.

It can be seen according to the foregoing description that the image recognition, the Bluetooth signal and the radio frequency signal have respective unique advantages in detecting the indication information, and their combined utilization can significantly improve the flexibility of detecting the indication information, thereby enabling the control device 120 to adapt to various complex environments.

Referring back to FIG. 2, at block 230, in response to detecting the indication information, the control device 120 determines a target travel path of the target robot from a current location toward the destination 320 based on the current location and the indication information of the target robot.

In some embodiments, in the case that the control device 120 detects the indication information, the control device 120 further needs to accurately know the current location of the target robot. This may be achieved based on a positioning device on the target robot.

In some embodiments, the control device 120 may detect whether a location identifier exists, the location identifier is configured to indicate a location of the indication information described above. If such a location identifier is detected, the control device 120 may determine the current location of the target robot based on the location identifier.

In some embodiments, the location identifier may comprise a variety of forms. For example, the location identifier may comprise a radio frequency tag, a QR code, a physical marker, or a specific identifier transmitted by using a wireless signal. These location identifiers may be pre-arranged in the target area 420.

In some embodiments, in the case that a location identifier is detected, the control device 120 may convert the location identifiers into specific spatial coordinates or area information, to determine the current location of the target robot. In this way, in a complex or dynamically changing environment, once a single navigation locating method is interfered or invalid, the control device 120 may further implement additional and stable locating means by using the location identifier in combination, thereby enhancing the robustness of the locating function.

In some embodiments, the location identifier comprises a coordinate indicating a location at which the information is located. The coordinate is a direct and accurate location representation method. The coordinate system may be a Cartesian coordinate, a polar coordinate, or other suitable coordinate system. These coordinates enable the control device 120 to accurately know the specific location of the target robot in the environment.

Alternatively or additionally, in some embodiments, the location identifier may comprise a location number indicating where the information is located. For example, the target area 420 may be divided into a plurality of sub-areas, and each sub-area may be assigned a unique location number that has an explicit meaning in the control device 120. By recognizing these numbers, the control device 120 may quickly determine its location.

In some embodiments, if a route guidance identifier for the destination 320 is detected from the indication information, the control device 120 may determine, based on the current location of the target robot and the route guidance identifier, a target travel direction of a travel path segment of the target robot from the current location.

In some embodiments, the control device 120 performs a combined analysis on the detected route guidance identifier and the current location of the robot, so as to understand, based on the current situation, the meaning of the indication information with respect to the next travel path segment (for example, "continue advancing" or "turn left immediately", etc.). In this way, the control device 120 may quickly determine the target travel direction of the next action for the target robot, the target travel direction may be a direction (for example, "go straight"), or a series of consecutive directions (for example, "go straight after turning left"). For example, referring to FIG. 4, the control device 120 may determine, based on the route guidance identifier in the go-straight indication information 411, to go straight in a next travel path segment 421. The control device 120 may determine, based on the route guidance identifier in the turn-left indication information 412, to go straight after turning left in a next travel path segment 422. The control device 120 may determine, based on the route guidance identifier in the turn-right indication information 413 and 414, to go straight after turning right in next travel path segments 423 and 424. In this way, the control device 120 may move from a location where the current indication information is located (or a location at which the indication information can be obtained) to a location where the next indication information is located (or a location at which the indication information can be obtained). Repeating the above operations, the control device 120 may guide the target robot to gradually approach the destination 320 with less or no reliance on the global map 310.

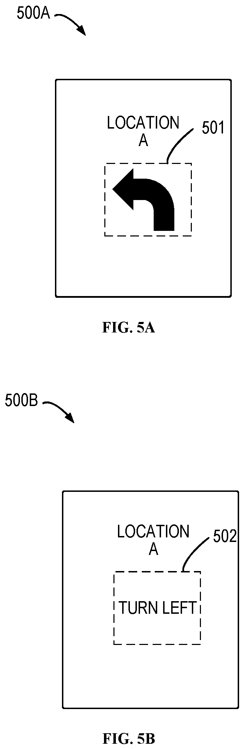

In some embodiments, the route guidance identifier comprises at least one of the following: graphics, or text. FIG. 5A illustrates a schematic diagram of an example 500A of the route guidance identifier according to some embodiments of the present disclosure. Referring to FIG. 5A, in some embodiments, the destination may be location A, and the control device 120 may capture, by a camera or another sensor, a graphical guidance identifier 501 for the location A, such as an arrow and a no-pass sign. The control device 120 can make decisions quickly based on a route guidance identifier in a graphical form, which causes a lighter computational burden.

FIG. 5B shows a schematic diagram of an example 500B of a route guidance identifier according to some embodiments of the present disclosure. Referring to FIG. 5B, in some embodiments, the control device 120 may make a decision to make a left turn by parsing the text route guidance identifier 502.

In some embodiments, the route guidance identifier may comprise a graphic and a text at the same time, so that the control device 120 may use the route guidance identifier in the graphic form and the route guidance identifier in the text form complementally, so that the target travel direction can be determined more quickly and accurately.

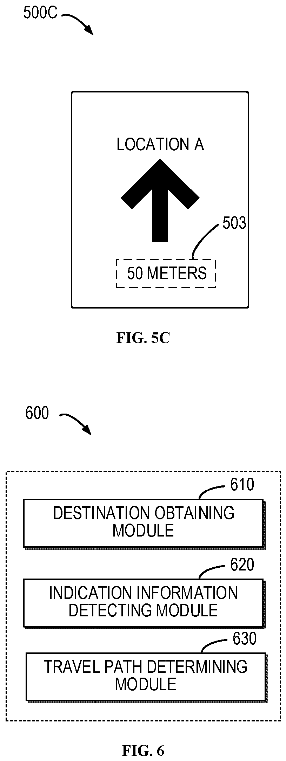

FIG. 5C illustrates a schematic diagram of an example 500C of a distance identifier according to some embodiments of the present disclosure. Referring to FIG. 5C, in some embodiments, in response to detecting a distance identifier 503 for the route guidance identifier from the indication information, the control device 120 determines a travel distance of the target robot in the target travel direction based on the current location of the target robot and the distance identifier 503.

In some embodiments, the distance identifier 503 may comprise a numeric identification. For example, the distance identifier 503 may indicate a straight-line distance from the current route guidance identifier to a next key point. Based on the distance identifier 503, the control device 120 may determine an exact distance that the target robot needs to move in the target travel direction, so that the target robot can accurately reach the next key point, and perform a next action at the key point (for example, determine whether it has arrived at the destination 320 or needs to continue advancing).

Referring back to FIG. 3, in some embodiments, the control device 120 obtains a global travel path 330 of the target robot in the target area 420, and the global travel path 330 is determined based on the start location of the target robot, the destination 320, and the global map 310 of the target area 420. For example, in the target area 420, the robot needs to move from location B to location A, and the control device 120 may plan the preferred global travel path 330.

The control device 120 then obtains a remaining travel path in the global travel path 330, wherein the remaining travel path is determined based on the global travel path 330 and a completed travel path of the target robot. For example, the control device 120 may keep tracking and updating the completed travel path as the robot moves. Further, the control device 120 calculates a remaining travel path based on the global travel path 330 and the completed travel path, such that the remaining travel path indicates a route that the robot needs to travel before reaching the end point.

In the case of obtaining the remaining travel path, the control device 120 updates the target travel path based on the current location, the indication information, and the remaining travel path of the target robot in response to a difference between the target travel path and the remaining travel path being greater than a threshold difference. For example, during the travel process of the target robot, the control device 120 continuously detects the difference between the target travel path and the remaining travel path, and re-plans the target travel path if the difference is greater than the threshold difference. In this way, the control device 120 may check the target travel path based on the global travel path 330, thereby preventing the control device 120 from planning an erroneous target travel path based on error indication information (or an error understanding of the indication information).

Through the description of the embodiments of the present disclosure, it can be more clearly understood that the embodiments of the present disclosure can accurately guide the target robot to reach the predetermined destination based on the indication information in the real-time environment. In this process, the real-time indication information helps the target robot adjust in the travel process to adapt to possible environmental changes, especially in the case that the global map 310 may not completely reflect the latest environmental change or the locating signal is poor. In addition, since the method is based on the indication information in the environment, the navigation of the target robot can alleviate or even get rid of reliance on the global map 310, thereby avoiding the problem of locating errors on the global map 310. In addition, the embodiments of the present disclosure may also perform navigation in combination with the global map 310. In this process, the global map 310 provides an overall navigation framework for the target robot, and the real-time indication information helps the target robot adjust in the traveling process. In this way, the embodiments of the present disclosure combine the static information of the global map 310 with the dynamic indication information in the environment, thereby adding additional robustness and fault tolerance for the target robot navigation, ensuring that the target robot can successfully reach the destination by overcoming various environmental interferences.

Moreover, embodiments of the present disclosure that travel according to the indication information in the environment may be separately used for path planning of the robot, or may be combined with other path planning methods.

### Example Apparatus and Devices

Embodiments of the present disclosure also provide a corresponding apparatus for implementing the above method or process. FIG. 6 shows a schematic structural block diagram of an apparatus 600 for robot travel according to some embodiments of the present disclosure. The apparatus 600 may be implemented or comprised in the control device 120. The various modules/components in the apparatus 600 may be implemented by hardware, software, firmware, or any combination thereof.

Referring to FIG. 6, the apparatus 600 comprises a destination obtaining module 610, an indication information detecting module 620, and a travel path determining module 630. In some embodiments, the destination obtaining module 610 is configured to obtain a destination of the target robot in the target area 420. The indication information detecting module 620 is configured to, in a process of the target robot traveling toward the destination, detecting, in an environment in which the target robot is located, indication information for the destination. The travel path determining module 630 is configured to, in response to detecting the indication information, determining, based on a current location of the target robot and the indication information, a target travel path of the target robot from the current location toward the destination.

In some embodiments, the apparatus 600 further comprises a travel path updating module configured to obtain a global travel path of the target robot in the target area, the global travel path being determined based on a start location of the target robot, a destination, and a global map of the target area; obtain a remaining travel path in the global travel path, wherein the remaining travel path is determined based on the global travel path and the completed travel path of the target robot; and in response to a difference between the target travel path and the remaining travel path being greater than a threshold difference, update the target travel path based on the current location of the target robot, the indication information, and the remaining path.

**In** some embodiments, the travel path determining module 630 is further configured to: in response to detecting, from the indication information, a route guidance identifier for the destination, determining, based on the current location of the target robot and the route guidance identifier, a target travel direction of a travel path segment of the target robot from the current location.

**In** some embodiments, the travel path determining module 630 is further configured to: in response to detecting, from the indication information, a distance identifier for the route guidance identifier, determining, based on the current location of the target robot and the distance identifier, a travel distance of the target robot in the target travel direction.

In some embodiments, the route guidance identifier comprises at least one of the following: graphics, or text.

In some embodiments, the apparatus 600 further comprises a current location determining module configured to in response to detecting a location identifier indicating a location of the indication information, determining the current location of the target robot based on the location identifier.

In some embodiments, the location identifier comprises at least one of: a coordinate of the location of the indication information, or a location number of the location of the indication information.

In some embodiments, detecting the indication information comprises at least one of the following: detecting at least a part of the indication information by performing image recognition on the environment in which the target robot is located, detecting at least a part of the indication information from the environment in which the target robot is located by utilizing the Bluetooth signal, or detecting at least a part of the indication information from the environment in which the target robot is located by utilizing the radio frequency signal.

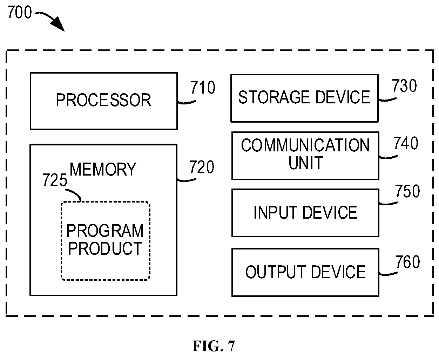

FIG. 7 illustrates a block diagram of an electronic device 700 in which one or more embodiments of the present disclosure may be implemented. For example, the electronic device 700 may be configured to implement the control device 120 shown in FIG. 1. It should be understood that the electronic device 700 illustrated in FIG. 7 is merely exemplary and should not constitute any limitation on the functionality and scope of the embodiments described herein.

Referring to FIG. 7, the electronic device 700 is in the form of a general-purpose electronic device. Components of the electronic device 700 may comprise, but are not limited to, one or more processing units or processors 710, a memory 720, a storage device 730, one or more communication units 740, one or more input devices 750, and one or more output devices 760. The processor 710 may be an actual or virtual processor and capable of performing various processes according to programs stored in the memory 720. In multiprocessor systems, multiple processors execute computer-executable instructions in parallel to improve parallel processing capabilities of electronic device 700.

Electronic device 700 typically comprises a plurality of computer storage media. Such media may be any available media accessible to the electronic device 700, comprising, but not limited to, volatile and non-volatile media, removable and non-removable media. The memory 720 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 730 may be a removable or non-removable medium and may comprise a machine-readable medium, such as a flash drive, magnetic disk, or any other medium, which may be capable of storing information and/or data and may be accessed within electronic device 700.

The electronic device 700 may further comprise additional removable/non-removable, volatile/non-volatile storage media. Although not shown in FIG. 7, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 720 may comprise a computer program product 725 having one or more program modules configured to perform various methods or actions of various embodiments of the present disclosure.

The communication unit 740 is configured to communicate with another electronic device through a communication medium. Additionally, the functionality of components of the electronic device 700 may be implemented in a single computing cluster or multiple computing machines capable of communicating over a communication connection. Thus, the electronic device 700 may operate in a networked environment using logical connections with one or more other servers, network personal computers (PCs), or another network node.

The input device 760 may be one or more input devices, such as a mouse, a keyboard, a trackball, or the like. The output device 760 may be one or more output devices, such as a display, a speaker, a printer, or the like. The electronic device 700 may also communicate with one or more external devices (not shown) through the communication unit 740 as needed, external devices such as storage devices, display devices, etc. , communicate with one or more devices that enable a user to interact with the electronic device 700, or communicate with any device (e.g., a network card, a modem, etc. ) that enables the electronic device 700 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and comprising computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions comprises an article of manufacture comprising instructions to implement aspects of the functions / acts specified in one or more blocks in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in one or more blocks in the flowchart and/or block diagram (s).

The flowchart and block diagrams in the accompanying figures show architecture, functionality, and operation of possible implementations of systems, methods, and computer program products according to various implementations of the present disclosure. In this regard, each block in the flowchart or block diagram may represent a module, program segment, or portion of an instruction that comprises one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. Determination of the terms used herein is intended to best explain the principles of the implementations, practical applications, or improvements to the technology in the marketplace, or to enable others of ordinary skill in the art to understand the various implementations disclosed herein.

## Claims

1. A method (200) for robot travel, comprising:
determining (210) a destination of a target robot in a target area;
in a process of the target robot traveling toward the destination, detecting (220), in an environment in which the target robot is located, indication information for the destination; and
in response to detecting the indication information, determining (230), based on a current location of the target robot and the indication information, a target travel path of the target robot from the current location toward the destination.

2. The method (200) of claim 1, further comprising:
obtaining a global travel path of the target robot in the target area, the global travel path being determined based on a start location of the target robot, the destination, and a global map of the target area;
obtaining a remaining travel path in the global travel path, wherein the remaining travel path is determined based on the global travel path and a completed travel path of the target robot; and
in response to a difference between the target travel path and the remaining travel path being greater than a threshold difference, updating the target travel path based on the current location of the target robot, the indication information, and the remaining travel path.

3. The method (200) of any of claims 1 to 2, wherein determining the travel path of the target robot from the current location toward the destination comprises:
in response to detecting, from the indication information, a route guidance identifier for the destination, determining, based on the current location of the target robot and the route guidance identifier, a target travel direction of a travel path segment of the target robot from the current location.

4. The method (200) of claim 3, wherein determining the travel path of the target robot from the current location toward the destination further comprises:
in response to detecting, from the indication information, a distance identifier for the route guidance identifier, determining, based on the current location of the target robot and the distance identifier, a travel distance of the target robot in the target travel direction.

5. The method (200) of any of claims 3 to 4, wherein the route guidance identifier comprises at least one of: graphics, or text.

6. The method (200) of any of claims 1 to 5, further comprising:
in response to detecting a location identifier indicating a location of the indication information, determining the current location of the target robot based on the location identifier.

7. The method (200) of claim 6, wherein the location identifier comprises at least one of: a coordinate of the location of the indication information, or a location number of the location of the indication information.

8. The method (200) of any of claims 1 to 7, wherein detecting the indication information comprises at least one of the following:
detecting at least a part of the indication information by performing image recognition on the environment in which the target robot is located,
detecting at least a part of the indication information from the environment in which the target robot is located by utilizing a Bluetooth signal, or
detecting at least a part of the indication information from the environment in which the target robot is located by utilizing a radio frequency signal.

9. An apparatus (600) for robot travel, comprising:
a destination obtaining module (610) configured to determine a destination of the target robot in the target area;
an indication information detecting module (620) configured to, in a process of the target robot traveling toward the destination, detect, in an environment in which the target robot is located, indication information for the destination; and
a travel path determining module (630) configured to, in response to detecting the indication information, determine, based on a current location of the target robot and the indication information, a target travel path of the target robot from the current location toward the destination.

10. An electronic device (700), comprising:
at least one processor (710); and
at least one memory (720), coupled to the at least one processor (710) and storing instructions to be executed by the at least one processor (710), the instructions, when executed by the at least one processor (710), causing the electronic device (700) to perform the method of any one of claims 1 to 8.

11. A computer-readable storage medium, having a computer program stored thereon, the computer program being executable by a processor to implement the method of any of claims 1 to 8.

12. A computer program product, comprising computer-executable instructions, wherein the computer-executable instructions, when executed by a processor, implement the method of any one of claims 1 to 8.
